# FASCICULE DE BREVET EUROPEEN

(11) **EP 1 477 014 B1**
(45) Date de publication et mention de la délivrance du brevet: **11.05.2011**
(21) Numéro de dépôt: 01969888.5
(22) Date de dépôt: 14.09.2001
(51) Int. Cl.: H04M 1/725

(54) **DISPOSITIF DESTINE A AMELIORER L'ACCES A INTERNET AU MOYEN D'UN TELEPHONE MOBILE METTANT EN OEUVRE UNE PAIRE DE LUNETTES A MATRICE ET UN ECRAN TACTILE DEFILANT**
VORRICHTUNG ZUR VERBESSERUNG DES INTERNETZUGANGES DURCH DIE BENUTZUNG EINES MOBILTELEFONS ZUSAMMENWIRKEND MIT EINER MATRIX-BRILLE UND EINEM BERÜHRUNGSEMPFINDLICHEN BILDSCHIRM
DEVICE FOR IMPROVING ACCESS TO INTERNET WITH A MOBILE TELEPHONE COMPRISING A PAIR OF SPECTACLES AND A MOVING TOUCH-SENSITIVE SCREEN

(43) Date de publication de la demande: 17.11.2004
(73) Titulaire: Parienti, Raoul, 06000 Nice (FR); Dias, Bernard, 92120 Palaiseau (FR)
(72) Inventeur: Parienti, Raoul, 06000 Nice (FR); Dias, Bernard, 92120 Palaiseau (FR)
(86) Numéro de dépôt international: PCT/FR2001/002858
(87) Numéro de publication internationale: WO 2002/023873

(56) Documents cités:
- WO-A1-00/63763
- DE-A- 19 844 301
- US-A- 6 085 112
- NARAYANASWAMY S ET AL: "USING DATA ON DIGITAL CELLULAR AND PCS VOICE NETWORKS" BELL LABS TECHNICAL JOURNAL,BELL LABORATORIES,US, vol. 3, no. 2, 1 avril 1998 (1998-04-01), pages 58-75, XP000772944 ISSN: 1089-7089

## Description

La présente invention concerne un dispositif permettant d'améliorer l'accès à réseau de transmission de l'information de type Internet au moyen d'un téléphone portable.

Elle s'applique au domaine des radiocommunications entre mobiles.

Après le développement spectaculaire de la téléphonie mobile et des réseaux de communication Internet, il a paru légitime de faire converger les deux technologies d'où la naissance des protocoles dits « WAP ».

Si l'idée paraît séduisante, la réalisation d'un tel objectif est loin d'être atteint notamment à cause du manque de convivialité le l'interface homme/machine.

En effet la miniaturisation gagnant, il paraît peu concevable de lire sur l'écran miniature d'un téléphone mobile ou de composer des messages sur le micro clavier d'un tel appareil.

Pour remédier à cela un certain nombre d'innovations ont vu le jour, tels que clavier additionnel, réalisation de boîtier s'ouvrant en deux parties et laissant apparaître un écran plus lisible couvrant la surface du téléphone mobile, etc. néanmoins, à ce jour toutes les tentatives de rapprochement simple et efficace entre l'ordinateur et la téléphonie mobile n'ont pas connu le développement attendu et sont restées marginales.

Le document WO 00/63763 A décrit un dispositif de maintenance basé sur un ordinateur et coopérant avec un petit écran. Dans le produit décrit l'ordinateur est externe et n'intègre pas d'écran tactile défiant ni une paire de lunette à matrice de pixels.

Le document US-A-6 085 112 décrit un téléphone connectable à un ordinateur comprenant un affichage optique oeuvrant via un prisme, ce dispositif n'offre pas la capacité de visualiser compatible avec l'énergie disponible dans un téléphone portable.

De plus ce dispositif n'offre pas l'intérêt majeur de l'écran tactile défilant permettant une écriture naturelle et coopérant avec une paire de lunettes à matrice de pixels.

Le document DE 198 44 301 A décrit un dispositif de transfert de données et d'images mais n'intègre aucun moyens permettant la saisie et l'interprétation de l'écriture manuelle tel qu'un écran tactile défilant, à des fins de traitement informatique.

L'invention proposée ici permet de remédier à ces inconvénients et apporte une solution simple et efficace au problème bien identifié du manque de convivialité de l'interface homme/machine permettant de rapprocher les deux univers de la téléphonie mobile et de celui de l'Internet, en essor exponentiel.

A cet effet, l'invention a pour objet un dispositif permettant d'améliorer l'accès par des utilisateurs à un réseau de transmission de type Internet au moyen d'un téléphone portable d'un réseau de transmission radio mobile du type GSM ou UMTS, caractérisée en ce qu'il comprend, un écran tactile défilant et une paire de lunette intégrant une matrice de pixels, l'écran tactile et la matrice de pixels coopérant avec un microprocesseur couplé aux circuits électroniques du téléphone portable, et en ce que le microprocesseur est programmé pour analyser le tracé des lettres et des mots effectué par l'utilisateur du dispositif sur l'écran tactile et les transcrire dans une police de caractères sélectionnée par l'utilisateur sur les matrices de pixels des lunettes.

D'autres caractéristiques et avantages de l'invention apparaîtront dans la description qui suit faite en regard des figures annexées:
Les figures 1 et 2 présentent un premier et un deuxième mode de mise en oeuvre d'un dispositif selon l'invention.
La figure 3 présente un mode de réalisation détaillé du dispositif représenté à la figure 2.
La figure 4 présente un schéma pour illustrer le fonctionnent du dispositif selon l'invention.

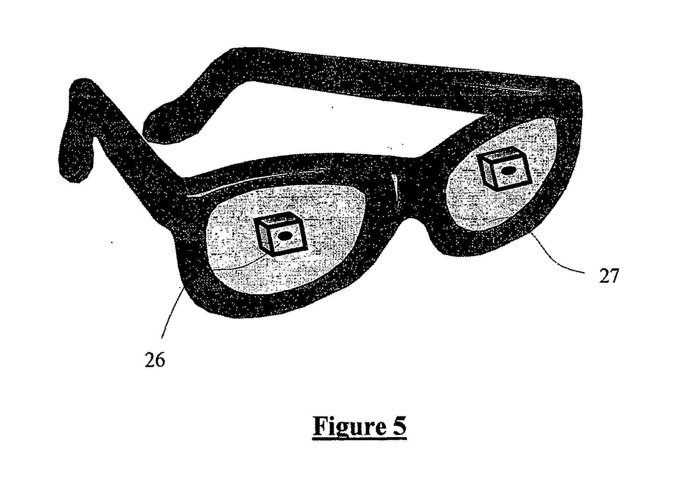

La figure 5 présente le positionnement de micro caméras sur des lunettes à matrice de pixels selon l'invention.

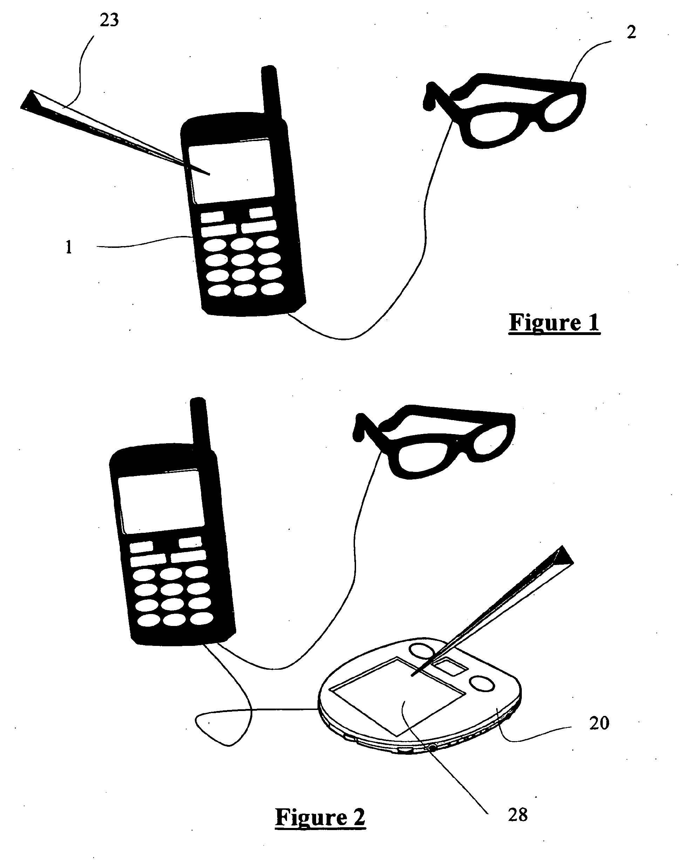

Le dispositif selon l'invention représenté aux figures 1 et 2 permet d'améliorer l'accès à un réseau de communication de type Internet au moyen d'un téléphone portable (1) adapté aux transmissions sur les réseaux radio mobile de type GSM ou UMTS notamment, les sigles GSM et UMTS étant respectivement les abréviations des vocables anglo-saxons de "GLOBAL SYSTEM MOBILE" et "UNIVERSAL MOBIL TELECOMMUNICATION SYSTEM". Il se compose essentiellement d'une paire de lunettes (2) intégrant une matrice de pixels coopérant avec un microprocesseur couplé aux circuits électroniques du téléphone portable (1) et d'un écran tactile « défilant » (3). Comme il a été indiqué précédemment, le manque de convivialité des interfaces homme/machine résulte de la taille très réduite aussi bien des claviers que de l'écran des téléphones mobiles.

Selon l'invention le minuscule écran des téléphones mobiles portables est remplacé pour la visualisation par des lunettes (2) à matrice de pixels et en supplément du clavier du même téléphone il est rajouté un dispositif d'écran tactile défilant (3) intégré comme le montre la figure 1 au téléphone portable (1) ou relié au téléphone portable (1) par un cordon. Les lunettes à matrices de pixels (2) peuvent intégrer sur leur partie arrière des micros haut-parleurs non représentés pour diffuser le son à proximité des oreilles de l'utilisateur.

Sur la figure 1 le dispositif comprend essentiellement un téléphone mobile portable 1 pourvu d'un écran tactile défilant (3), coopérant avec une paire de lunettes (2) à matrice de pixels. Les dites lunettes présentent devant chaque oeil une matrice de pixels et un système optique de type connu et non représenté permettant d'éloigner l'image pour obtenir une vision confortable ainsi que la perception d'une image unique. Ce résultat est déjà réalisé dans le cadre de lunettes destinées aux lecteurs de disques portables connus sous le sigle « DVD » de la marque « SONY » (marque déposée).

Pour éviter que l'utilisateur du dispositif soit trop isolé de son milieu lorsqu'il utilise le dispositif de l'invention, les dites lunettes (2) intègrent, outre la partie réservée à la matrice de pixels, une autre partie de la surface de l'oculaire de la lunette est réalisée dans un matériau à obscurcissement variable réglable par l'utilisateur. Suivant cette technologie le verre est chargé de sels métalliques, matériaux capables de filtrer la lumière de façon progressive en fonction de la différence de potentiel qui est appliquée.

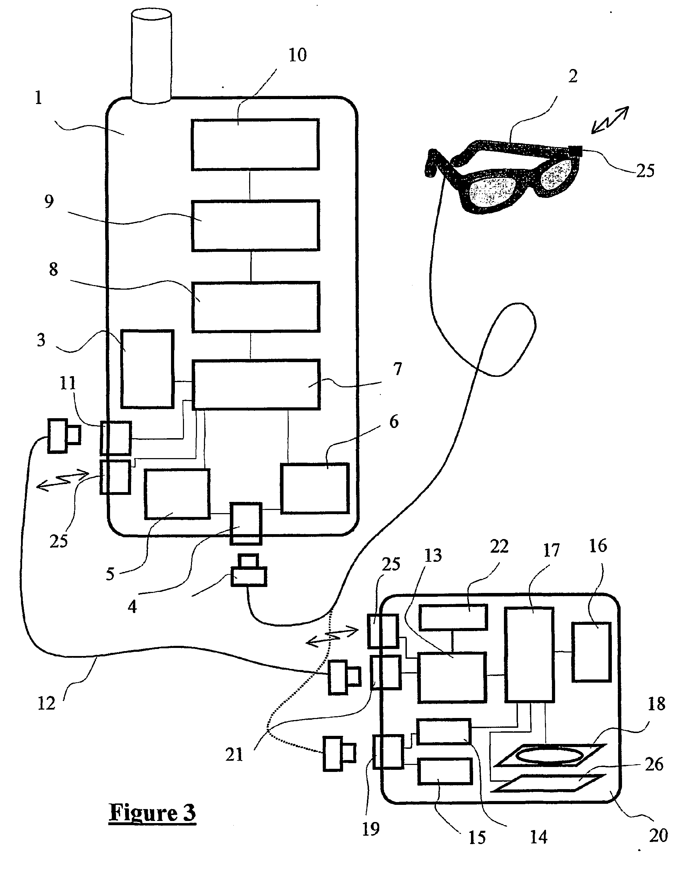

Le téléphone mobile portable (1) utilisé dans la présente invention pour la mise en oeuvre du dispositif intègre une électronique adaptée à sa fonction, outre les fonctions classiques connues dans tout téléphone mobile. Celle ci est réalisée de la manière représentée à la figure 3 autour d'un microprocesseur (7) gérant un ensemble de mémoire RAM et ROM, d'un modem (8), et d'une carte vidéo (6) capable de gérer les deux matrices de pixels se situant devant chaque oeil de l'utilisateur.

Le microprocesseur (7) gère l'écran tactile (3) défilant se situant sur le téléphone mobile (1). Ledit écran tactile. (3) peut être le même écran dont est pourvu tout téléphone mobile ou encore un écran différant pouvant se situer au dos de l'appareil. L'écran défilant tactile (3) est stimulé par un stylet adapté (23).

L'invention dans sa première forme permet l'accès à Internet d'une façon particulièrement conviviale.

En effet pour accéder au réseau Internet, l'utilisateur porte les lunettes à matrice de pixels (2), percevant ainsi une image de dimension confortable, et pour guise de clavier, l'utilisateur n'a qu'à écrire de la manière la plus naturelle qu'il soit avec le stylet (23) sur l'écran tactile (3). Un logiciel temps réel de type connu est exécuté par le microprocesseur (7) pour analyser le tracé des lettres composant les mots, par exemple le logiciel « Transciber » (marque déposée) commercialisé par la société Microsoft. Ainsi, les lettres et les mots tracés de façon manuscrite sur l'écran tactile (3) sont reconnus par ledit logiciel et transcrits dans une police de caractères sélectionnée par l'utilisateur. Les dits mots et lettres ainsi reconnus sont visualisés dans les lunettes (2) à matrices de pixels.

Ainsi,pour l'utilisateur, tout se passe comme s'il se trouvait devant un écran de bonne taille, l'introduction des données pouvant s'effectuer aussi rapidement, voire plus rapidement qu'avec un clavier classique.

L'invention décrite dans le présent document se décline principalement en deux applications.

1/ La version de base représentée à la figure 1 comprenant un téléphone mobile portable 1 et une paire de lunettes à matrice de pixels (2).

Dans cette version, qui est orientée vers les applications accès au réseau Internet, le téléphone mobile intègre un modem, une mémoire vive suffisante pour les applications Internet, et un ensemble de logiciels utile pour lesdites applications, lesdits logiciels peuvent être stockés dans une mémoire ROM ou EPROM pour s'enrichir par des mises à jour.

2/ La version complète comprend, en outre des sous ensembles vus plus hauts, un boîtier de type baladeur (20) supportant, comme montré sur la figure 3, un écran tactile (28) et intégrant un véritable ordinateur comprenant les composants classiques d'un ordinateur portable : disque dur (22), microprocesseur puissant (13), mémoire RAM (16), batteries, lecteur de cédérom ou DVD (18) et l'ensemble des connexions utiles.

Cette dernière version est susceptible de révolutionner le monde de l'informatique portable, car elle permettrait à son utilisateur de disposer d'un ordinateur de poche à la fois puissant et convivial capable d'effectuer toutes les tâches permises par une machine puissante et ce instantanément et avec une grande simplicité.

L'utilisateur pourra ainsi aussi bien « surfer » sur Internet, avec des performances de débits fonction des réseaux disponibles, que s'amuser, lire ou travailler, confortablement installé dans un fauteuil d'avion ou de train.

Selon un mode de fonctionnement usuel de l'invention dans le cadre de la version de base vue plus haut, l'utilisateur se connecte sur le réseau en composant sur le clavier de son téléphone portable le numéro d'accès habituel. Il voit alors apparaître sur l'écran réalisé par les matrices de pixels des lunettes (2) la même image que s'il avait opéré à partir de son ordinateur classique. Le stylet permet à l'utilisateur deux fonctions: d'une part il permet par glissements sur l'écran tactile défilant d'écrire des textes, d'autre part il présente les mêmes fonctions qu'une « souris » informatique traditionnelle.

Pour réaliser cette dernière fonction le stylet (23) coopère avec l'écran tactile défilant (3) selon deux possibilités : posé et appuyé.

Lorsqu'il est posé sur l'écran tactile défilant (3), il apparaît sur l'écran des matrices de pixel des lunettes (2), sous la forme d'un symbole spécifique (flèche , sablier, triangle etc.), à l'instar des symboles caractéristiques activés par une « souris » informatique.

Lorsque ledit stylet (23) presse sur l'écran tactile (3) il crée le même effet que l'action d'un double clic d'une souris informatique sur la zone de l'écran où apparaissent les symboles caractéristiques vus plus haut.

Le mode de fonctionnement posé s'assimile au glissement du stylet (23) sur l'écran (3) sous un contact avec une pression faible, par exemple inférieure à 20 Grammes. Le glissement du stylet (23) sur certaines zones de l'écran visualisé sur les matrices de pixels des lunettes (2) peut correspondre à un simple click de « souris » informatique.

Le mode appuyé correspond au double click d'une « souris » d'ordinateur est obtenu par une pression du stylet supérieure à 20 grammes sur l'écran tactile, il peut aussi bien être obtenu par une frappe brève de l'écran avec ledit stylet.

Il est également possible de réaliser un effet « click bouton droit » d'une souris informatique par une double frappes du stylet sur l'écran tactile (3).

Ainsi par une combinaison d'actions simples et intuitives l'action du stylet (23) sur l'écran (3) permet de réaliser des échanges homme/machine aussi conviviaux que celui permis par des ordinateurs traditionnels.

Selon une autre version l'écran tactile (3) est pourvu de moyens, non représentés, de reconnaissance du stylet à très courte distance (de quelques millimètres à quelques centimètres). Pour ce faire le stylet peut être magnétique et l'écran peut intégrer sur sa surface des capteurs adaptés. On peut aussi intégrer une diode électroluminescente dans le stylet et un ensemble de capteurs optiques dans l'écran tactile (3) .

Dans le cas d'un stylet (23) oeuvrant sans contact à très courte distance, une image dudit stylet peut apparaître sur l'écran constitué des matrices de pixels des lunettes (2) sous la forme d'une tache d'autant plus nette et petite que ledit stylet est proche de l'écran, donnant ainsi à l'utilisateur une convivialité accrue.

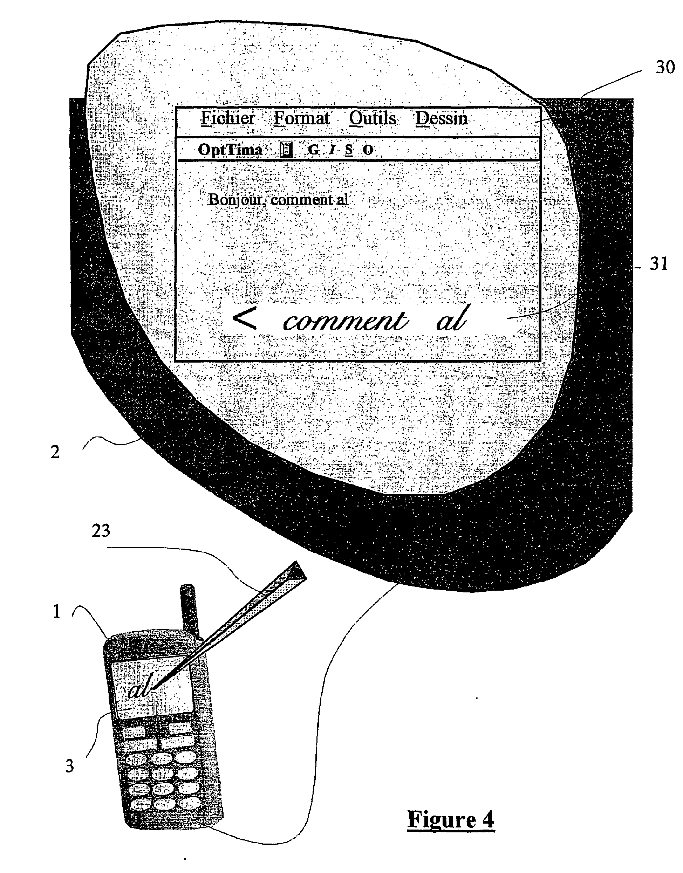

Comme montré sur la figure 4 l'image de l'écran qui apparaît à la vue de l'utilisateur par la matrice de pixels est identique en tout point à celle d'un écran classique intégrant une barre d'outils (30) formées par des icônes, symboles, logo, partition de la surface d'écran etc.. Mais elle intègre en plus préférentiellement, dans le bas de l'écran, une zone destinée à visualiser les caractères manuscrits (31) au fur et à mesure que l'utilisateur écrit sur l'écran tactile.

Un logiciel de type « OCR » abréviation du vocable anglosaxon « ORIGINAL CHARACTER RECOGNITION » interprète en temps réel les caractères puis les mots écrits manuellement par l'utilisateur sur l'écran tactile grâce au stylet. Aussitôt reconnus les lettres et les mots identifiés par ledit « OCR » s'affichent à l'écran par les matrices de pixels intégrées dans les lunettes (2).

A tout moment l'utilisateur peut vérifier les mots identifiés par le logiciel de type « OCR », en visualisant simultanément les caractères manuscrits défilant au bas de l'écran et leur affichage au haut de l'écran après interprétation par ledit logiciel. Si une lettre ou un mot n'est pas convenablement transcrit par « l'OCR », l'utilisateur le barre sur la partie manuscrite au bas de l'écran sur la zone réservée au défilement de l'écriture manuscrite, ce qui a pour effet d'effacer la partie transcrite correspondant à la lettre ou au mot barré sur le haut de l'écran. L'utilisateur écrit à nouveau le mot mal reconnu par le logiciel, lequel une fois bien identifié par ledit logiciel va à nouveau apparaître sur la partie supérieure de l'écran à la place initiale.

Nous allons maintenant décrire le mode de fonctionnement de l'écran défilant.

Lorsque le stylet (23) glisse sur l'écran tactile défilant (3) pour écrire un texte, la stimulation du stylet (23) sur l'écran tactile défilant (3) va faire apparaître sur une partie de l'écran à matrices de pixels des lunettes (2) portées par l'utilisateur le texte écrit manuellement, et, simultanément le même texte apparaît transcrit en caractère conforme à la police de caractère choisie, comme indiqué sur la figure 4, grâce à un logiciel temps réel capable de reconnaître l'écriture cursive. Parallèlement au fur et à mesure que l'utilisateur écrit sur l'écran défilant (3), ledit écran défilant va faire défiler l'image constituée par la succession de mots de droite à gauche pour les langues dont l'écriture s'écrit de gauche à droite et dans l'autre sens pour les langues dont l'écriture s'écrit de droite à gauche.

L'écran défilant fonctionne selon plusieurs modes :
- le mode tracé de lettres,
- le mode tracé de mots,
- le mode graphique.

Le mode tracé de lettres se caractérise par le fait que le microprocesseur (7) provoque le défilement de l'écran tactile défilant (3) de droite à gauche (pour une langue s'écrivant de gauche à droite), au fur et à mesure que l'utilisateur trace les lettres sur l'écran tactile. L'utilisateur voit alors sur une partie de l'écran réalisé par les matrices de pixels les lettres des mots se traçant en même temps. En fait le stylet (23) manoeuvré par l'utilisateur fait quasiment du surplace sur l'écran tactile.

Le mode tracé de mots se caractérise par le fait que l'utilisateur écrit un mot entier en déplaçant le stylet sur l'écran tactile défilant. En fin de mot le microprocesseur (7) provoque le défilement de l'écran tactile défilant (3) selon la largeur occupée par ledit mot sur l'écran tactile (3). L'utilisateur lève alors le stylet (23) de l'écran (3) et le ramène au bord de l'écran tactile défilant (3) (bord gauche pour les langues occidentales).

Le mode graphique se caractérise par le fait que le stylet (23) trace à loisir traits, dessins, signatures, idéogrammes, etc.. L'écran défilant reste immobile et le microprocesseur (7) ne provoque le défilement que si l'utilisateur presse avec son stylet (23) une des quatre flèches situées aux quatre extrémités de la zone d'écriture visualisée sur l'écran constitué par les matrices de pixels comme représenté sur la figure 4.

Le logiciel conçu pour reconnaître l'écriture cursive pourra, pour être efficace, être initialisé par une phase d'apprentissage compte tenu de la grande diversité des écritures manuelles.

Nous allons décrire maintenant un mode de réalisation détaillé du dispositif selon l'invention représenté à la figure 3. Comme indiqué précédemment, dans sa version de base le dispositif selon l'invention est constitué d'un couple d'appareils composé d'un téléphone mobile portable (1) relié par un câble de connexion à la paire de lunettes à matrice de pixels (2). Un stylet (23) permet de stimuler l'écran tactile défilant (3). La figure 2 montre l'invention dans sa version complète comprenant outre le couple d'appareil décrit plus haut un troisième boîtier constitué en fait d'un ordinateur type « baladeur » (20).

Le téléphone mobile (1) commun au deux modes de réalisation du dispositif comprend essentiellement le clavier tactile défilant (3). Un module (9) propre à tout téléphone mobile type GSM puis UMTS gère l'ensemble des sous-ensembles classiques (10) (haut-parleur, microphone, amplificateur BF, clavier), permettant d'obtenir les fonctionnalités d'un téléphone mobile classique. Un microprocesseur (7) orchestre l'ensemble de l'électronique utile pour assurer les fonctionnalités propres à l'invention. Ledit microprocesseur (7) gère une carte vidéo (6), une carte son (5), l'écran tactile défilant (3) et une mémoire (24). Un modem (8) permet d'échanger les données entre le module radiofréquence (9) et le microprocesseur (7).

Une sortie (4) permet de connecter les lunettes à matrices de pixels (2) et un port (11) permet de connecter le téléphone mobile (1) à l'ordinateur baladeur (20) de la figure 2 qui peut être fixé à la ceinture de l'utilisateur.

Cet ordinateur baladeur (20) comprend les sous ensembles classiques des ordinateurs : un microprocesseur (13) qui gère un disque dur (22), une carte mère (17) qui assure les connexions de tous les sous ensembles, une carte vidéo (14), une carte son (15), un lecteur de DVD ou cédérom (18). L'ordinateur baladeur (20) est pourvu d'une sortie (19) permettant la connexion avec les lunettes à matrices de pixels (2) et un port (21) permettant la connexion avec le téléphone mobile (1) par un câble dédié (12).

Les câbles de connexion téléphone mobile (1)/lunettes (2) et téléphone mobile (1)/ordinateur baladeur (20) peuvent avantageusement être remplacés par des liaisons sans fils répondant par exemple à la nouvelle norme « bluetooth », chaque appareil disposant de sa propre puce radio (25). La mise en oeuvre de cette dernière technologie permettra à plusieurs personnes disposant de lunettes à matrices de pixel de voir la même image et d'écouter le même son.

Selon un mode de réalisation plus sophistiqué de l'invention, l'ordinateur baladeur (20) est pourvu d'un écran tactile (28) permettant également une visualisation directe.

Selon une option encore plus sophistiquée de réalisation de l'invention représentée à la figure 4, celle-ci intègre devant chaque oculaire (27) des lunettes (2) une micro caméra (26) capable de saisir des films et/ou images fixes qui seront visualisés en temps réel ou différés. Les dits films et /ou images sont susceptibles d'être enrichis de commentaires manuscrits ou transcrits grâce à l'OCR, dans une police de caractères choisie par l'utilisateur, selon les modalités vues plus haut, à savoir en écrivant sur l'écran tactile.

Les images saisies par les deux caméras (26) apparaissant sur l'écran à matrices de pixels laissent une partie de l'écran disponible pour ajouter des commentaires comme décrit plus haut. Les dites images saisies par les deux caméras sont émises via le téléphone mobile (1) selon deux canaux, par multiplexage ou autres moyens connus, et sont exploitées préférentiellement par une autre paire de lunettes à matrices de pixels (2) distante conforme à l'invention. Il est ainsi possible d'obtenir une vision stéréoscopique en relief à distance, les images saisies par la micro caméra fixée sur l'oculaire droit étant visualisées par l'oeil droit sur les matrice de pixels des lunettes (2) distantes, les images saisies par la micro caméra fixée sur l'oculaire gauche étant visualisées par l'oeil gauche sur les matrices de pixels des lunettes (2) distantes.

Les images stéréoscopiques ainsi saisies par les deux micro caméras (26) peuvent être exploitées en temps réel ou stockées dans un support mémoire quelconque pour une exploitation en différé.

L'exploitation des images stéréoscopiques commentées s'effectue de façon préférentielle à l'aide de lunettes à matrice de pixels (2) comme il est dit plus haut, mais les dites images peuvent aussi bien être traitées par tout procédé connu telle que la polarisation selon deux composantes horizontale et verticale, chacune des composantes étant réservée à chacun des yeux droit et gauche. Les images ainsi traitées sont visualisées sur un écran classique, la vision stéréoscopique étant permise par des lunettes adaptées.

Les formes dimensions et dispositions des différents éléments, ainsi que les variantes utilisées pour la réalisation, pourront varier dans la limite des équivalents, sans changer pour cela la conception générale de l'invention, qui vient d'être décrite.

## Revendications

1. Dispositif permettant d'améliorer l'accès par des utilisateurs à un réseau de transmission de type Internet, ledit dispositif comprenant une paire de lunettes et un téléphone mobile portable (1) connecté à un réseau de transmission radio mobile du type GSM ou UMTS, le téléphone mobile portable étant couplé à la paire de lunettes par l'intermédiaire d'un microprocesseur (7) se trouvant dans le téléphone mobile portable;
ledit dispositif étant **caractérisé en ce que**
- ladite paire de lunettes comporte une matrice de pixels, et ledit téléphone mobile portable comporte un écran tactile défilant (3, 28), l'écran tactile (3, 28) et la matrice de pixels coopérant avec le microprocesseur (7) au moyen des circuits électronique du téléphone mobile portable, et
- ledit microprocesseur (7) est programmé pour analyser le tracé des lettres et des mots effectué par l'utilisateur sur l'écran tactile (3, 28) au moyen d'un stylet (23) et effectuer leur transcription dans une police de caractères sélectionnée par l'utilisateur sur la matrice de pixels des lunettes.

2. Dispositif selon la revendication 1, **caractérisé en ce que** ladite police de caractères est sélectionnée par l'utilisateur au moyen d'une barre d'outils affichée sur l'écran formé par la matrice de pixels des lunettes (2) par manipulation du stylet (23) sur l'écran tactile.

3. Dispositif selon la revendication 1 ou 2, **caractérisé en ce que** le microprocesseur (7) est programmé pour que, lorsque le stylet (23) est posé sur l'écran tactile défilant (3, 28), il apparaît sur l'écran des matrices de pixel des lunettes (2) sous la forme d'un symbole spécifique (flèche, sablier, triangle...) à l'instar des symboles caractéristiques activés par une souris informatique,

4. Dispositif selon la revendication 1, 2 ou 3, **caractérisé en ce que** le microprocesseur (7) est programmé pour que, lorsque ledit stylet (23) presse sur l'écran tactile (3, 28) il ait le même effet que l'action d'un double clic d'une souris informatique sur la zone de l'écran où apparaîssent les symboles caractéristiques.

5. Dispositif selon l'une des revendications 1 à 4, **caractérisé en ce que**, le microprocesseur (7) est programmé pour réaliser un effet « click bouton droit » d'une « souris informatique par une double frappe du stylet (23) sur l'écran tactile (3, 28).

6. Dispositif selon l'une quelconques des revendications 2 à 5, **caractérisé en ce que**, l'écran tactile (3, 28) est pourvu de moyens de reconnaissance du stylet (23) à très courte distance, de quelques millimètres à quelques centimètres.

7. Dispositif selon l'une quelconque des revendications 2 à 6, **caractérisé en ce que** le microprocesseur (7) est programmé dans un mode tracé de lettres pour provoquer le défilement de l'écran tactile défilant (3, 28)) de gauche à droite pour l'écriture dans une langue occidentale, au fur et à mesure que l'utilisateur trace les lettres sur l'écran tactile (3, 28), de sorte que l'utilisateur voit sur une partie de l'écran réalisé par les matrices de pixels, les lettres des mots se tracer en même temps, le stylet (23) manoeuvré par l'utilisateur faisant quasiment du surplace sur l'écran tactile.

8. Dispositif selon l'une quelconques des revendications 2 à 7, **caractérisé en ce que** le microprocesseur (7) est programmé dans un mode tracé de mots pour que lorsque l'utilisateur écrit un mot entier en déplaçant le stylet sur l'écran tactile,et qu'en fin de mot le microprocesseur provoque le défilement de l'écran tactile défilant (3, 28)) selon la largeur occupée par le dit mot sur l'écran tactile, ce retour ayant lieu lorsque l'utilisateur lève le stylet (23) et le ramène au bord dudit écran tactile défilant (3, 28), (bord gauche pour les langues occidentales).

9. Dispositif selon l'une quelconques des revendications 2 à 8, **caractérisé en ce que** le microprocesseur est programmé dans un mode graphique suivant lequel l'écran défilant reste immobile et le microprocesseur (7)ne provoque le défilement que si l'utilisateur presse avec son stylet(29) sur au moins une flèche située aux quatre extrémités de la zone d'écriture visualisé sur l'écran réalisé par les matrices de pixels.

10. Dispositif selon l'une quelconque des revendications 1 à 9, **caractérisé en ce qu'**il comprend en outre un ordinateur baladeur (20), les liaisons téléphone mobile (1)/lunettes (2) et téléphone mobile (1)/ordinateur baladeur (20) étant assurées par des liaisons sans fils radio de type « bluetooth », chaque élément disposant de sa propre puce radio (25), la mise en oeuvre de cette dernière technologie permettant à plusieurs personnes disposant de lunettes à matrices de pixels de voir la même image et d'écouter le même son.

11. Dispositif selon l'une quelconques des revendications précédentes, **caractérisé en ce qu'**il comprend deux caméras (26) intégrées aux lunettes de ladite paire de lunettes (2), les images saisies par les deux caméras (26) apparaissant sur l'écran à matrices de pixels en laissant une partie de l'écran pour les commentaires écrits et **en ce qu'**il comprend une autre paire de lunettes à matrice de pixels, les images étant émises selon deux canaux et visualisées par ladite autre paire de lunettes pour obtenir des images stéréoscopique en relief.

12. Dispositif selon la revendication 11, **caractérisé en ce que** lesdites images stéréoscopique saisies par les deux caméras (26), sont exploitées en temps réel, ou stockées dans un support mémoire quelconque afin d'être exploitées en temps différé.

13. Dispositif selon la revendication 11 ou 12, **caractérisé en ce que** lesdites images stéréoscopiques sont traitées par tout procédé connu telle que la polarisation et sont visionnées sur un écran classique, de manière à obtenir une vision stéréoscopique des images.

14. Dispositif selon l'une quelconque des revendications précédentes, **caractérisé en ce que** lorsque le stylet (23) oeuvre sans contact à très courte distance, une image dudit stylet apparaît sur l'écran constitué de la matrice de pixels des lunettes (2) sous forme d'une tache d'autant plus nette et petite que le stylet est proche de l'écran.

## Claims

1. Device allowing a better access by users to a transmission network like Internet, the said device including a pair of glasses and a portable mobile phone (1) connected to a mobile radio transmission network, such as GSM or UMTS, the portable mobile phone being linked to the pair of glasses through a microprocessor (7) located inside the portable mobile phone;
The said device being **characterised by** the following items:
- the said pair of glasses includes a pixel matrix, and the said portable mobile phone includes a « moving » touch screen (3,28), the touch screen (3, 28) and the pixel matrix being connected to the microprocessor (7) through the electronic circuits of the portable mobile phone, and
- The said microprocessor (7) is programmed in order to analyse the drawing by the user of letters and words on the touch screen (3, 28) thanks to a "pen" (23) and to translate them into a character font selected by the user on the pixel matrix of the glasses.

2. Device according to claim 1, **characterised by** the fact that the said character font is selected by the user through a tool bar displayed on the screen made by the pixel matrix of the glasses (2) through the use of the "pen" (23) on the touch screen.

3. Device according to claims 1 or 2, **characterised by** the fact the microprocessor (7) is programmed so that, when the « pen » (23) is in contact with the « moving » touch screen (3, 28), it appears on the pixel matrix screen of the glasses (2) with the pattern of a specific symbol (arrow, sandglass, triangle...) like the specific symbols activated by a computer mouse,

4. Device according to claims 1, 2 or 3, **characterised by** the fact that the microprocessor (7) is programmed so that, when the said « pen » (23) puts some pressure on the touch screen (3, 28) the induced effect is the same as the double click of a computer mouse on the screen area where the specific symbols appear.

5. Device according to one of the claims 1 to 4, **characterised by** the fact that , the microprocessor (7) is programmed so that the "right button click" effect of a computer mouse is achieved by pressing twice the "pen" (23) on the touch screen (3, 28).

6. Device according to any of the claims 2 to 5, **characterised by** the fact that, the touch screen (3, 28) is fitted with localisation means of the "pen" (23) within a very short distance, from a few millimetres to a few centimetres.

7. Device according to any of the claims 2 to 6, **characterised by** the fact that the microprocessor (7) is programmed in the mode drawing of letters so that to trigger the « motion » of the « moving » touch screen (3, 28) from left to right for writing in a western language, while the user is drawing the letters on the touch screen (3, 28), in order for the user to see on a portion of the screen made by the pixel matrices, the letters of the words being displayed at the same time, while the "pen" (23) handled by the user draws the letters almost on the same spot on the touch screen.

8. Device according to any of the claims 2 to 7, **characterised by** the fact that the microprocessor (7) is programmed in the mode drawing of words so that when the user writes a complete word by moving the « pen » on the touch screen, and that at the end of the word the microprocessor induces the "motion" of the "moving" touch screen (3, 28)) depending on the width of the said word on the touch screen, this return happening when the user lifts the "pen" (23) and brings it back to the edge of the said "moving" touch screen (3, 28), (left rim for the western languages).

9. Device according to any of the claims 2 to 8, **characterised by** the fact that the microprocessor is programmed in a graphic mode such that the « moving » screen remains steady and the microprocessor (7) induces the « motion » only when the user presses with his « pen » (29) on at least one arrow located at the four edges of the zone allocated for writing displayed on the screen made with the pixel matrices.

10. Device according to any of the claims 1 to 9, **characterised by** the fact that in addition it includes a mobile computer (20), the links mobile phone (1)/ glasses (2) and mobile phone (1)/mobile computer (20) being achieved with wireless radio links such as « bluetooth », each component being fitted with its own radio chip (25), the implementation of that technology allowing several users equipped with glasses with pixel matrices to view the same image and to hear the same sound.

11. Device according to any of the previous claims, **characterised by** the fact that it includes cameras (26) integrated within the glasses of the said pair of glasses (2), the images captured by the cameras (26) appearing on the screen made of pixel matrices while leaving one portion of the screen for written comments and by the fact it includes another pair of glasses with pixel matrices, the images being transmitted through 2 channels and displayed by the said other pair of glasses in order to obtain 3D stereoscopic images.

12. Device according to claim 11, **characterised by** the fact that the said stereoscopic images captured by the two cameras (26), are real time processed, or stored in any memory support in order to be processed later.

13. Device according to claim 11 or 12, **characterised by** the fact that the said stereoscopic images are processed by any known mean such as polarisation and are displayed on a usual screen, in order to get a stereoscopic viewing of the images.

14. Device according to any of the previous claims, **characterised by** the fact that when the « pen » (23) operates without contact at a very short distance, an image of the said "pen" appears on the screen made of pixel matrices of the glasses (2) with the shape of a spot that is sharper and smaller when the "pen" is close to the screen.

## Patentansprüche

1. Vorrichtung zu einem verbesserten Zugang der Nutzer zu einem Übertragungsnetz vom Typ Internet, bei welcher die besagte Vorrichtung eine Brille und ein Mobiltelefon (1) umfasst, das an ein Übertragungsnetz für den Mobilfunk vom Typ GSM oder UMTS angeschlossen ist und bei welcher das Mobiltelefon mit der Brille über einen Mikroprozessor (7) verbunden ist, der sich im Mobiltelefon befindet;
die besagte Vorrichtung ist **dadurch gekennzeichnet, dass**
- die besagte Brille eine Pixelmatrix und das besagte Mobiltelefon einen scrollbaren, taktilen Bildschirm (Touchscreen; 3, 28) umfasst und dass der taktile Bildschirm (3, 28) und die Pixelmatrix mit dem Mikroprozessor (7) mittels der elektronischen Schaltkreise des Mobiltelefons zusammenarbeiten, und
- der besagte Mikroprozessor (7) programmiert ist, um den Verlauf der Buchstaben und der Worte zu analysieren, die der Benutzer auf dem Touchscreen (3, 28) mittels eines Eingabestifts (23) eingibt und in eine von ihm auf der Pixelmatrix der Brille gewählte Schriftart überträgt.

2. Vorrichtung gemäß Patentanspruch 1, die **dadurch** charakterisiert ist, dass die besagte Schriftart vom Benutzer mittels einer Toolbar, die auf dem Bildschirm angezeigt wird, der durch die Pixelmatrix der Brille (2) gebildet wird, mittels Bewegung des Eingabestifts (23) auf dem Touchscreen ausgewählt wird.

3. Vorrichtung gemäß Patentanspruch 1 oder 2, **dadurch gekennzeichnet, dass** der Mikroprozessor (7) so programmiert ist, dass, wenn der Eingabestift (23) auf dem scrollbaren Touchscreen (3, 28) aufgesetzt wird, der Eingabestift auf dem durch die Pixelmatrix gebildeten Bildschirm der Brille (2) in Form eines spezifischen Symbols erscheint (Pfeil, Sanduhr, Dreieck...), genau wie die charakteristischen Symbole, die mit einer Computermaus aktiviert werden,

4. Vorrichtung gemäß Patentanspruch 1, 2 oder 3, **dadurch gekennzeichnet, dass** der Mikroprozessor (7) so programmiert ist, dass, wenn besagter Eingabestift (23) auf den Touchscreen drückt (3, 28), er zum gleichen Ergebnis führt wie ein Doppelklick auf die Taste einer Computermaus in dem Bereich des Bildschirms, auf dem die charakteristischen Symbole erscheinen.

5. Vorrichtung gemäß einem der Patentansprüche 1 bis 4, **dadurch gekennzeichnet, dass** der Mikroprozessor (7) programmiert ist, um das Ergebnis, dass durch einen "Klick auf die rechte Maustaste" einer Computermaus erzielt wird, durch eine doppelte Berührung des Touchscreen (3, 28) mit dem Eingabestift (23)zu erreichen.

6. Vorrichtung gemäß einem der Patentansprüche 2 bis 5, **dadurch gekennzeichnet, dass** der taktile Bildschirm (3, 28) mit Mitteln zur Erkennung des Eingabestifts (23) über eine sehr kurze Distanz - von wenigen Millimetern bis zu einigen Zentimetern - ausgerüstet ist.

7. Vorrichtung gemäß einem der Patentansprüche 2 bis 6, **dadurch gekennzeichnet, dass** der Mikroprozessor (7) in einem den Verlauf der Buchstaben aufzeichnenden Modus programmiert ist, um das Abscrollen des scrollenden Touchscreen (3, 28) von links nach rechts für das Schreiben in einer westlichen Sprache herbeizuführen, wenn der Benutzer nach und nach die Buchstaben auf dem Touchscreen (3, 28) schreibt, so dass der Benutzer auf einem Teil des durch die Pixelmatrixen gebildeten Bildschirms die Buchstaben der Worte zeitgleich erscheinen sieht, während der vom Benutzer bewegte Eingabestift (23) sich dabei auf dem Touchscreen fast auf der Stelle bewegt.

8. Vorrichtung gemäß einem der Patentansprüche 2 bis 7, **dadurch gekennzeichnet, dass** der Mikroprozessor (7) in einem den Verlauf der Worte aufzeichnenden Modus programmiert ist, so dass, wenn der Benutzer ein vollständiges Wort schreibt, indem er den Eingabestift auf dem Touchscreen bewegt, der Mikroprozessor am Wortende das Abscrollen des scrollenden Touchscreens (3, 28) je nach Breite des besagten Wortes auf dem Touchscreen einleitet, wobei dieser Umbruch erfolgt, wenn der Benutzer den Eingabestift (23) absetzt und ihn am Rand des besagten scrollenden Bildschirms (3, 28) wieder aufsetzt (linker Rand für die westlichen Sprachen).

9. Vorrichtung gemäß einem der Patentansprüche 2 bis 8, **dadurch gekennzeichnet, dass** der Mikroprozessor in einem Graphikmodus derart programmiert ist, dass der scrollende Bildschirm unbeweglich bleibt und der Mikroprozessor (7) das Scrollen nur dann hervorruft, wenn der Benutzer mit seinem Eingabestift (23) mindestens auf einen Pfeil drückt, der sich an den vier Außenseiten der Schreibzone befindet, die auf dem durch die Pixelmatrixen gebildeten Bildschirm angezeigt wird.

10. Vorrichtung gemäß einem der Patentansprüche 1 bis 9, **dadurch** charakterisiert, dass sie darüber hinaus einen tragbaren Computer (20) besitzt, wobei die Verbindungen Mobiltelefon (1) /Brille (2) und Mobiltelefon (1) / tragbarer Computer (20) durch Wireless-Funkverbindungen vom Typ "Bluetooth" gewährleistet sind, wobei jedes Element über seinen eigenen Funkchip (25) verfügt. Dank der Anwendung dieser Technologie können mehrere Personen, die über eine Brille mit Pixelmatrixen verfügen, das gleiche Bild sehen und den gleichen Ton hören.

11. Vorrichtung gemäß einem der vorhergehenden Patentansprüche, **dadurch** charakterisiert, dass sie zwei in die besagte Brille (2) integrierte Kameras umfasst (26), wobei die von den beiden Kameras (26) aufgenommenen Bilder auf dem aus der Pixelmatrix bestehenden Bildschirm erscheinen, wobei ein Teil des Bildschirms für schriftliche Kommentare freigelassen wird. Die Vorrichtung umfasst eine weitere Brille mit einer Pixelmatrix. Die Bilder werden über zwei Kanäle erzeugt und durch die besagte andere Brille dargestellt, so dass stereoskopische Reliefbilder entstehen.

12. Vorrichtung gemäß Patentanspruch 11, **dadurch gekennzeichnet, dass** die besagten stereoskopischen Bilder, die von den beiden Kameras (26) aufgenommen wurden, in Echtzeit verarbeitet werden oder auf einem beliebigen Speichermedium abgespeichert werden, um zeitlich versetzt ausgewertet zu werden.

13. Vorrichtung gemäß Patentanspruch 11 oder 12, **dadurch gekennzeichnet, dass** die besagten stereoskopischen Bilder mit jedem bekannten Verfahren, wie Polarisation, bearbeitet und auf einem klassischen Bildschirm angezeigt werden, so dass eine stereoskopische Ansicht der Bilder erzielt wird.

14. Vorrichtung gemäß einem der vorhergehenden Patentansprüche, **dadurch gekennzeichnet, dass**, wenn der Eingabestift (23) ohne Kontakt über eine sehr kurze Distanz arbeitet, der besagte Eingabestift auf dem aus der Pixelmatrix der Brille (2) gebildeten Bildschirm in Form eines Flecks abgebildet wird, der um so deutlicher und kleiner wird, je näher der Eingabestift dem Bildschirm ist.
